# EUROPEAN PATENT APPLICATION

(11) **EP 2 876 709 A1**
(43) Date of publication of application: **27.05.2015**
(21) Application number: 14193157.6
(22) Date of filing: 14.11.2014
(51) Int. Cl.: H01M 4/1399, H01G 11/06, H01M 4/36, H01M 4/60, H01M 12/00, H01M 4/04, H01M 4/62, H01M 4/02

(54) **Lithium ion capacitor**

(30) Priority: 22.11.2013 JP 2013241790; 22.11.2013 JP 2013241820
(71) Applicant: Funai Electric Co., Ltd., Daito city Osaka 574-0013 (JP)
(72) Inventor: Shimomura, Takeshi, Tsukuba City, Ibaraki 305-0047 (JP); Sumiya, Touru, Tsukuba City, Ibaraki 305-0047 (JP); Suzuki, Masao, Tsukuba City, Ibaraki 305-0047 (JP); Ono, Masatoshi, Tsukuba City, Ibaraki 305-0047 (JP)
(74) Representative: Osha Liang

(57) **Abstract**

A lithium ion capacitor (1) includes a positive electrode (10), a negative electrode (20), and an electrolyte. The positive electrode (10) comprises a conductive polymer and an oxidation-reduction material having a lower oxidation-reduction potential than the conductive polymer as a positive electrode active material.

## Description

### [Technical Field]

The present invention relates generally to a lithium ion capacitor.

### [Background Art]

A conventional electric double layer capacitor (also referred to as a "super capacitor") is one type of electrochemical capacitor. The electric double layer capacitor is known as an electric storage device with high output density, short full charge and discharge time, and long cycle life. The electric double layer capacitor is installed in various industrial equipment or devices such as smart phones, forklifts, idle stop vehicles, and the like, office automation equipment, home electric appliances, industrial tools, and the like.

However, the energy density of a conventional electric double layer capacitor is lower than a chemical cell such as a lithium ion battery, nickel hydride battery, and the like.

Thus, a lithium ion capacitor having a structure where a negative electrode of the lithium ion battery and a positive electrode of an electric double layer capacitor are combined has been proposed. This is intended to improve the energy density and to increase the capacitor voltage by using a carbon electrode pre-doped with lithium ions as the negative electrode.

However, even though the energy density of the conventional lithium ion capacitor is higher than the energy density of the electric double layer capacitor, it still falls short in the energy density of the lithium ion battery. Accordingly, the lithium ion capacitor may not be fully sufficient to use as a battery for consumer use where the energy density is significant.

Meanwhile, as a lithium ion battery having good performance, a battery using an indigo compound as a positive electrode active material (see Patent Document 1) and a battery using a 1,4,5,8- anthracentetrone compound, a 5,7,12,14-pentacenetetrone compound, as the positive electrode active material (see Patent Document 2) or the like has been proposed.

### [Related Art Documents]

[Patent Document 1] Japanese Unexamined Patent Application Publication No. 2011-103260
[Patent Document 2] Japanese Unexamined Patent Application Publication No. 2012-155884

However, even though the configuration of lithium ion battery described in Patent Documents 1 or 2 is applied into a lithium ion capacitor as is, the lithium ion capacitor having a sufficient energy density cannot be obtained practically.

### [Summary of the Invention]

One or more embodiments of the invention provide a lithium ion capacitor having a high energy density and a method of manufacturing thereof.

According to one or more embodiments of the present invention, a lithium ion capacitor may comprise a positive electrode, a negative electrode, and an electrolyte, wherein the positive electrode may comprise a conductive polymer and an oxidation reduction material having a lower oxidation reduction potential than the conductive polymer as the positive electrode active material.

Further, according to one or more embodiments of the present invention, the oxidation reduction material may be an acene compound derivative having at least two ketone structures, and the acene compound may be represented by the following formula (1): 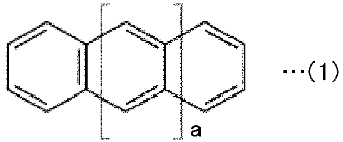 wherein, a is in an integer of 0 or higher.

Furthermore, according to one or more embodiments of the present invention, the oxidation reduction material may be at least one selected from a group comprising naphthoquinone, anthraquinone, pentacenetetrone, and derivatives of these.

Moreover, according to one or more embodiments of the present invention, the oxidation reduction material may be an indigo compound represented by the following formula (2): 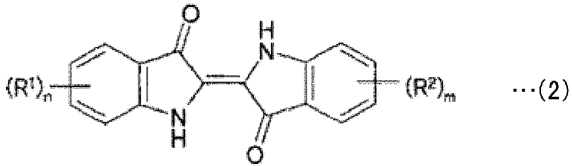 wherein each of R¹ and R² is a group-SO₃M (M is a hydrogen atom, an alkali metal, or (M¹)_{1/2} (M¹ is an alkali earth metal), n and m are integers between 0 and 2, respectively, and n number of R¹ and m number of R² may be identical with or different from each other.

Further, according to one or more embodiments of the present invention, the n and m in the above formula (2) may each be either 0 or 1.

Furthermore, according to one or more embodiments of the present invention, the indigo compound may be at least one selected from a group comprising indigo and Indigo Carmine.

Moreover, according to one or more embodiments of the present invention, the conductive polymer may be at least one selected from a group comprising polyaniline, polypyrrole, and polythiophene.

Further, according to one or more embodiments of the present invention, the positive electrode may further comprise a porous body.

Furthermore, according to one or more embodiments of the present invention, the porous body may be an electrically conductive porous body.

Moreover, according to one or more embodiments of the present invention, the electrically conductive porous body may be at least one selected from a group comprising grapheme, carbon nanotube, and carbon nanofiber.

According to one or more embodiments of the present invention, a lithium ion capacitor having a high energy density and a method of manufacturing thereof can be provided because the artificial capacitance is manifest near the oxidation reduction potential of the conductive polymer and near the oxidation reduction potential of the oxidation reduction material. For example, according to one or more embodiments, a method for manufacturing a lithium ion capacitor may comprise: preparing a positive electrode; preparing a negative electrode; and preparing a medium that comprises one or more electrolytes, wherein the preparing of the positive electrode may comprise producing a positive electrode active material by blending a conductive polymer and an oxidation-reduction material having a lower oxidation-reduction potential than the conductive polymer.

### [Brief Description of the Drawings]

FIG. 1 is an exploded perspective view illustrating one example of a lithium ion capacitor according to one or more embodiments of the present invention.
FIG. 2 is a cross-sectional view illustrating one example of the lithium ion capacitor according to one or more embodiments of the present invention.
FIG. 3A is a graph illustrating results of a charge and discharge test conducted using the capacitor according to one or more embodiments of the present invention.
FIG. 3B is a graph illustrating results of a charge and discharge test conducted using the capacitor according to one or more embodiments of the present invention.
FIG. 4A is a graph illustrating results of a charge and discharge test conducted using the capacitor according to one or more embodiments of the present invention.
FIG. 4B is a graph illustrating results of a charge and discharge test conducted using the capacitor according to one or more embodiments of the present invention.
FIG. 5 is a graph illustrating results of a charge and discharge test conducted using the capacitor according to one or more embodiments of the present invention.
FIG. 6 is a graph illustrating results of a charge and discharge test conducted using the capacitor according to one or more embodiments of the present invention.

### [Detailed Description of Embodiments]

A lithium ion capacitor according to one or more embodiments of the present invention will be described hereinafter with reference to drawings. In one or more embodiments described below, various examples are provided in order to implement the present invention; however, the scope of the present invention is not limited to the embodiments and illustrative examples below.

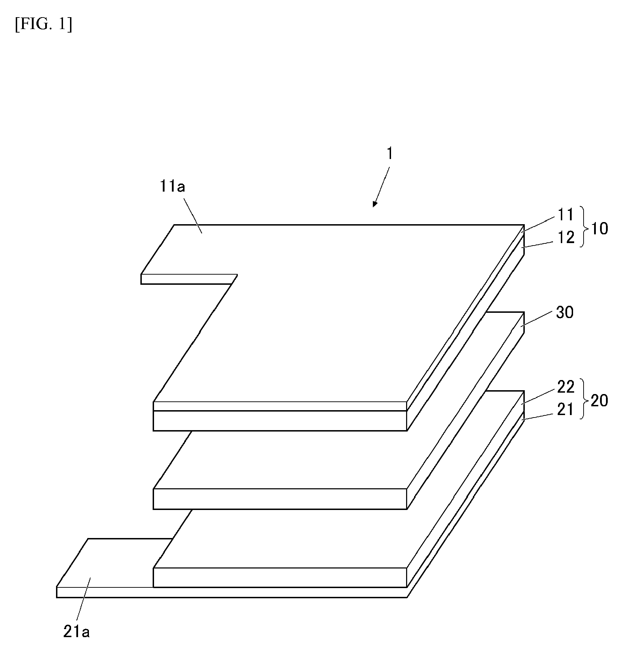

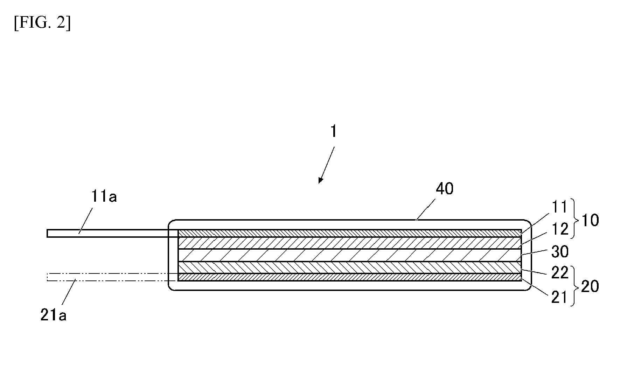

FIG. 1 is an exploded perspective view illustrating one example of a lithium ion capacitor 1 according to one or more embodiments of the present invention, and FIG. 2 is a cross-sectional view illustrating one example of the lithium ion capacitor 1 according to one or more embodiments of the present invention. The lithium ion capacitor 1 is an electric storage device that may comprise, as illustrated in FIGS. 1 and 2, a positive electrode current collector 11 and a negative electrode current collector 21 disposed facing each other, a positive electrode active material layer 12 formed on one surface (surface of the negative electrode current collector 21 side) of the positive electrode current collector 11 and a negative electrode active material layer 22 formed on one surface (surface of positive electrode current collector 11 side) of the negative electrode current collector 21, a separator 30 disposed between the positive electrode active material layer 12 and the negative electrode active material layer 22, electrolytes impregnated into the separator 30, and an enclosure body 40 for enclosing thereof. Illustration of the enclosure body 40 is omitted in FIG. 1.

Further, for a stacked type capacitor, the positive electrode active material layer 12 and negative electrode active material layer 22 may be duplitized (coated) on both surfaces of each current collector and are packaged by stacking in parallel and in series.

The current collectors 11 and 21 may function to electrically connect the active material layers 12 and 22 to an external circuit. Terminals 11a and 21a that are drawn out outside the enclosure body 40 and connected to the external circuit may be formed on the current collectors 11 and 21. The material used for the current collectors 11 and 21 may be any as far as the material has characteristics for, for example, (1) high electron conductivity, (2) can stably reside in the capacitor, (3) can reduce the volume inside the capacitor (made into thin film), (4) has a light weight per unit volume (be lightweight), (5) easily worked, (6) has a practical strength, (7) has adhesiveness (mechanical adhesion), (8) does not corrode or dissolve by electrolytes, and the like. For example, it may be a metal electrode material such as platinum, aluminum, gold, silver, copper, titanium, nickel, iron, stainless steel, or the like, or it may be a non-metallic electrode material such as carbon, conductive rubber, conductive polymer, or the like. Further, at least the inner surface of the enclosure body 40 may be formed with a metal electrode material and/or a non-metallic electrode material and provided with the active material layers 12 and 22 on the inner surface thereof. In this case, the enclosure body 40 may also serve as the current collectors 11 and 21.

Here, the positive electrode 10 of the electrode for the lithium ion capacitor 1 according to one or more embodiments of the present invention may comprise the positive electrode current collector 11 and the positive electrode active material layer 12 provided on the surface of the positive electrode current collector 11. Furthermore, the negative electrode 20 of the electrode for the lithium ion capacitor 1 according to one or more embodiments of the present invention may comprise the negative electrode current collector 21 and the negative electrode active material layer 22 provided on the surface of the negative electrode current collector 21.

The positive electrode active material layer 12 may comprise a positive electrode material, a conducing aid, and a binder resin and may be provided on the surface on the positive electrode current collector 11.

In one or more embodiments, a blended material of a conductive polymer and an oxidation-reduction material having a lower oxidation-reduction potential than the conductive polymer may be used as the positive electrode active material. Accordingly, an electrostatic capacitance of the lithium ion capacitor 1 can be artificially increased by transferring electrons by an oxidation-reduction reaction of the conductive polymer and the oxidation-reduction material. Furthermore, because the artificial capacitance is manifest by being divided near the oxidation-reduction potential of the conductive polymer and near the oxidation-reduction potential of the oxidation-reduction material, an energy density of the lithium ion capacitor 1 can be increased. Also, because ion movements in and out are fast in both the conductive polymer and the oxidation-reduction material, a high output density can be obtained.

A polymer obtained by polymerizing at least one polymerizable monomer selected from aniline, pyrrole, and thiophene may be used as the conductive polymer for the positive electrode material.
For example, for the conductive polymer, polyaniline, polypyrrole, or polythiophene may be used, or a copolymer of at least two from polyaniline, polypyrrole, and polythiophene may be used, or these polymers may be mixed and used.

Further, when a conductive polymer is synthesized by using aniline, pyrrole, and thiophene for a polymerizable monomer, an anionic surfactant, a cationic surfactant, or a neutral surfactant may be added to a polymerizable monomer solution where the polymerizable monomer is dissolved.

The conductive polymer for the positive electrode material is not limited to a polymer obtained by polymerizing at least one polymerizable monomer selected from aniline, pyrrole, and thiophene and may be changed freely as appropriate.

The oxidation-reduction material for the positive electrode active material may be appropriately and freely selected according to a type of conductive polymer used in the positive electrode active material. For example, when the conductive polymer for the positive electrode active material is a polymer obtained by polymerizing at least one polymerizable monomer selected from aniline, pyrrole, and thiophene, a derivative of an acene compound represented by the following formula (1) and having at least a ketone structure (hereinafter, referred to as simply an "acene compound derivative"), an indigo compound represented by the following formula (2) (hereinafter, referred to as simply an "indigo compound"), or a benzoquinone derivative may be used. 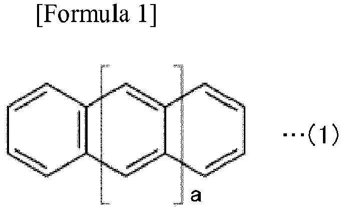 (Note, however, that a is an integer of 0 or higher.) 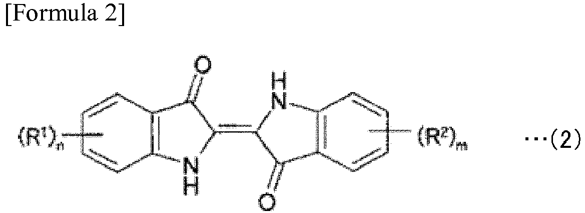 (Note, however, each of R¹ and R² in the formula is a group-SO₃M (M is a hydrogen atom, an alkali metal, or (M¹)_{1/2} (M¹ is an alkali earth metal)). n and m are integers between 0 and 2, respectively, and n number of R¹ and m number of R² may be the same or different from each other.)

An indigo compound may have an n that is "0" or "1" in the above formula (2), and may have an m that is "0" or "1" in the above formula (2). The indigo compound where n and m in the above formula (2) are "0" or "1", respectively, may have excellent cycle characteristics as it is less likely to dissolve into the solvent even after repeated charging and discharging.

Further, no particular limitation is imposed on a substitution position of R¹ and R² in the above formula (2); however, an indigo compound where R¹ and R² are substituted at position 5, 5', 7, 7' or the like is easily synthesized by an electrophilic reaction.

Other examples of the indigo compound may include a compound where n and m in the above formula (2) are "0" respectively, that is an indigo represented by the following formula (3), or a compound where n and m in the above formula (2) are "1" respectively and R¹ and R² in the above formula (2) are "-SO₃Na" respectively, that is Indigo Carmine represented by the following formula (4). However, these are not intended to limit the indigo compound.

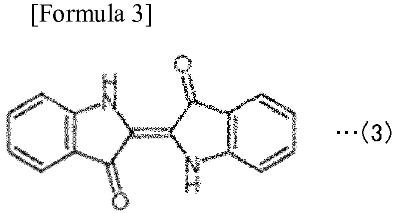

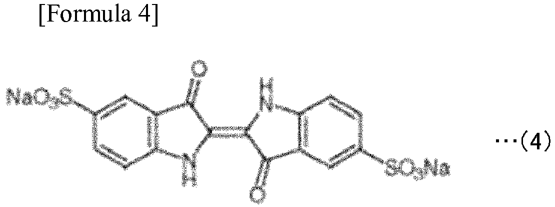

For the acene compound derivative, at least one of the rings contained in the acene compound represented by formula (1) described above may have two ketone structures.

For example, the acene compound derivative may include a derivative where a in the above formula (1) is "0" and one ring has two ketone structures, that is, naphthoquinone represented by the following formula (5) or a derivative thereof, a derivative where a in the above formula (1) is "1" and one ring has two ketone structures, that is anthraquinone represented by the following formula (6) or a derivative thereof, a derivative where a in the above formula (1) is "3" and one ring has two ketone structures, that is pentacenetetrone represented by the following formula (7) or a derivative thereof, and a derivative where a in the above formula (1) is "1" and two rings have two ketone structures respectively, that is 1,4,5,8- anthracentetrone or a derivative thereof. However, these are not intended to limit the acene compound derivative.

The acene compound derivative, having a large theoretical capacity derived from a plurality of electron reactions, can be effectively used as a positive electrode active material. For example, a theoretical capacity of 1,4,5,8- anthracentetrone is extraordinarily large that is 450mAh/g.

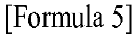

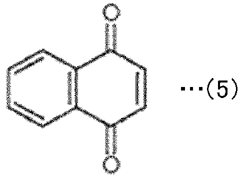

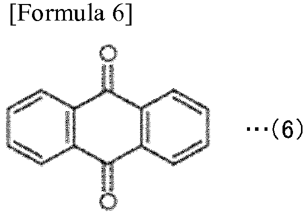

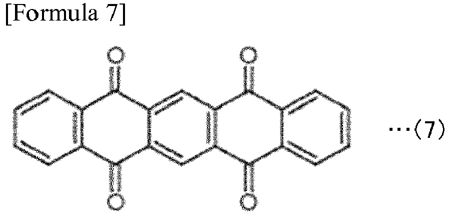

Benzoquinone derivative may include dihydroxy benzoquinone represented by the following formula (8) or dimethoxy benzoquinone represented by the following formula (9). However, these are not intended to limit the benzoquinone derivative.

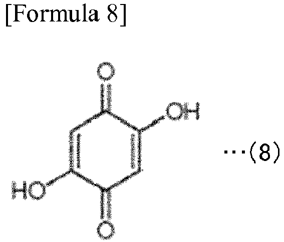

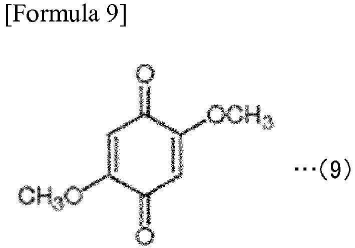

The positive electrode active material may further include a porous body in addition to a blended material of a conductive polymer and an oxidation-reduction material having a lower oxidation-reduction potential than the conductive polymer. When the porous body is included in the positive electrode active material, not only the capacity increasing effect due to the addition of artificial capacitance associated with the conductive polymer and the oxidation-reduction reaction of the oxidation-reduction material, but also the capacity increasing effect can be received due to the electric double layer formed on the surface of the porous body having a large specific surface area, and therefore, the lithium ion capacitor 1 can be made to have a higher capacitance.

The porous body for the positive electrode active material may be an electrically conductive porous body such as activated carbon or an insulative porous material such as silica. For example, a conductive porous body may be employed from the perspective of using as an electrode material. Furthermore, among the electrically conductive porous body, a porous body made of an electrically conductive carbon material such as activated carbon, grapheme, carbon nanotube, carbon nanofiber and the like may be employed from the perspective of production cost. Also, by appropriately selecting an amount and a type of a conducting aid, the insulative porous body also can be used as a porous body for the positive electrode active material.

When the porous body is included in the positive electrode active material, the positive electrode active material may include one type of porous body or a plurality of types of porous bodies.

The negative electrode active material layer 22 may include a negative electrode material, a conducing aid, and a binder resin and may be provided on the surface of the negative electrode current collector 21.

In one or more embodiments of the present invention, an active material that is capable of occluding lithium ions may be used as the negative electrode active material, and an electrode where the lithium ions are pre-doped may be used as the negative electrode 20. Accordingly, the potential of the negative electrode 20 is lowered, and therefore, the cell voltage of the lithium ion capacitor 1 (capacitor voltage) can be increased.

The negative electrode active material may include polyacenic organic semiconductors (PAS), graphitic materials (natural graphite, artificial graphite, modified graphite), easily graphitizable carbon, hardly graphitizable carbon, low temperature fired carbon, coke, various graphite materials, carbon fiber, resin fired carbon, pyrolysis vapor-grown carbon, mesocarbon microbeads (MCM), mesophase pitch based carbon fiber, graphite whiskers, quasi-isotropic carbon (PIC), fired substance of a natural material, lithium titanium oxide (LTO) represented by the general formula Li₄Ti₅O₁₂, and hydrogen titanium oxide (HTO) represented by the general formula H₂Ti₁₂O₂₅; however, these are not intended to limit the negative electrode active material.

The negative electrode active material may include one type of active material or may include a plurality of types of active materials.

Further, the negative electrode 20 may use an active material that is capable of occluding lithium ions as the negative electrode active material such as a carbon electrode where lithium ions have been pre-doped. However, it is not limited to the electrode where lithium ions have been pre-doped (absorbed in advance), and for example, it may be a lithium electrode composed of metallic lithium.

The conducting aid included in the active material layers 12 and 22 may function to lower internal resistance of the lithium ion capacitor 1. For the conducting aid, for example, carbon black such as acetylene black, furnace black, channel black, thermal black, Ketjenblack, or the like may be used.

The binder resin included in the active material layers 12 and 22 may function to secure together in a mixed state of the active material and the conducting aid. For the binder resin, for example, styrene butadiene rubber (SBR), polytetrafluoroethylene (PTFE), polyvinyldene fluoride (PVdF), tetrafluoroethylene-propylene (FEPM), elastomer binder, or the like may be used, and after kneading by a wet process or a dry process, it can be coated on a collecting electrode (current collector).

The separator 30 may be disposed between adjacent positive electrode 10 and negative electrode 20, and function to prevent a short due to contact with the positive electrode 10 and the negative electrode 20 within the enclosure body 40. An insulating material capable of holding an electrolyte solution may be used as the material of the separator 30, and the insulating material may be selected depending on whether the electrolyte solution included in the separator 30 is an aqueous electrolyte solution or a non-aqueous electrolyte solution. For example, a film such as polyolefin, polytetrafluoroethylene (PTFE), polyethylene, cellulose, polyvinyldene fluoride (PVdF), or the like may be used for the separator 30.

The electrolyte solution impregnated in the separator 30 may be an aqueous electrolyte solution or a non-aqueous electrolyte solution.

For the aqueous electrolyte solution, an aqueous solution of a supporting electrolyte type may be used.

Typical supporting electrolytes are H₂SO₄, HCl, KCl, NaCl, KOH, NaOH, and the like; however, the supporting electrolyte is not intended to be limited thereto.

The electrolyte solution may include one type of supporting electrolyte or may include a plurality of types of supporting electrolytes.

Further, for the non-aqueous electrolyte solution, a substance obtained by dissolving a supporting electrolyte into a prescribed organic solvent may be used.

Typical supporting electrolytes are TEABF₄, TEAPF₆, LiPF₆, LiBF₄, LiClO₄, TEABF₄, TEAPF₆ and the like; however the supporting electrolyte is not intended to be limited thereto.

For the prescribed organic solvent, for example, ethylene carbonate (EC), ethyl methyl carbonate (EMC), propylene carbonate (PC), diethyl carbonate (DEC), dimethyl carbonate (DMC) and the like may be used.

The enclosure body 40 may function to enclose a stacked body of the current collectors 11 and 21, the active material layers 12 and 22, and the separator 30 impregnated with and holding an electrolyte solution. Here, the enclosure body 40 and the current collectors 11 and 21 are insulated.

For the material of the enclosure body 40, a laminate film material made of aluminum, stainless steel, titanium, nickel, platinum, gold, or the like, alternatively, a laminate film material made of an alloy thereof, or the like may be employed.

Next, one example of a method for manufacturing the lithium ion capacitor 1 in one or more embodiments of the present invention will be described.

First, a positive electrode active material slurry may be prepared by mixing and kneading a blended material (positive electrode active material) of a conductive polymer and an oxidation-reduction material having a lower oxidation-reduction potential than the conductive polymer, a conducting aid used for the positive electrode active material layer 12, and a binder resin used for the positive electrode active material layer 12. If necessary, the conductive polymer may be doped or de-doped, after the conductive polymer is in the doped state or de-doped state and kneaded with the oxidation-reduction material, conducting aid, and binder resin.

Subsequently, the positive electrode 10 may be prepared by placing the positive electrode active material slurry on the positive electrode current collector 11, applying pressure, and forming the positive electrode active material layer 12 on the surface of the positive electrode current collector 11.

Further, a negative electrode active material slurry may be prepared by mixing and kneading an active material (negative electrode active material) capable of occluding lithium ions, a conducting aid used for a negative electrode active material layer 22, and a binder resin used for the negative electrode active material layer 22.

Subsequently, a negative electrode 20 may be prepared by placing the negative electrode active material slurry on the negative electrode current collector 21, applying pressure, and forming the negative electrode active material layer 22 on the surface of the negative electrode current collector 21.

A carbon electrode may be prepared pre-doped with lithium ions and used as the negative electrode 20, or alternatively, a lithium electrode composed of metallic lithium may be prepared and used as is as the negative electrode 20.

Next, the positive electrode 10 and the negative electrode 20 may be arranged so that the positive electrode active material layer 12 and the negative electrode active material layer 22 face to each other, and the separator 30 impregnated with the electrolyte solution may be inserted there between to prepare the capacitor main body.

Subsequently, the capacitor main body may be enclosed in the enclosure body 40, and the enclosure body 40 may be sealed under vacuum. Accordingly, the lithium ion capacitor 1 may be completed.

In FIG. 1, the positive electrode 10, the negative electrode 20 and the separator 30 illustrate a rectangular shaped lithium ion capacitor 1; however, the shape of the positive electrode 10, negative electrode 20 and separator 30 may be modified freely and appropriately, and it may be, for example, a circular shape.

One or more embodiments of the present invention will be described below with reference to specific examples; however, the present invention is not limited to the examples.

A lithium ion capacitor 1 was configured by a positive electrode 10 where a conductive polymer (dedoped polyaniline) and an oxidation-reduction material (indigo compound, acene compound derivative, benzoquinone derivative) having a lower oxidation-reduction potential than the conductive polymer is used as the positive electrode active material and the negative electrode 20 composed of a pre-doped graphite sheet, and characteristics of the lithium ion capacitor 1 were evaluated by conducting a charge and discharge test.

The positive electrode 10 was prepared first.

A blended material of de-doped polyaniline (that is, polyaniline having undergone de-doping treatment) and indigo (ID, see formula (3) described above) that is one type of indigo compound was used as the positive electrode active material, the de-doped polyaniline (12 mg), indigo (12 mg), acetylene black (3 mg) that is a conducting aid, and PTFE (3 mg) that is a binder resin were mixed and kneaded in a mortar to obtain a positive electrode active material slurry.

Subsequently, a mesh of aluminum (thickness: 100 µm) was used as the positive electrode current collector 11, the positive electrode active material slurry was stretched into a sheet and placed on the positive electrode collector 11, a pressure of 10 MPa was then applied for molding to form the positive electrode active material layer 12 on the surface of the positive electrode current collector 11. A circular shape with a diameter of 15 mm was then stamped to prepare the positive electrode 10 in a circular shape. Thereafter, it was dried under reduced pressure at 100 °C for 24 hours to sufficiently extract moisture.

Next, a negative electrode 20 was prepared.

A graphite sheet was stamped in a circular shape with a diameter of 15 mm, and dried under reduced pressure at 100 °C for 24 hours to sufficiently extract moisture.

Next, a separator 30 (a circular shaped polyolefin film (diameter: 20 mm)) was placed on a Li foil that had been stamped in a circular shape with a diameter of 15 mm, an electrolyte solution (LiPF₆ (electrolyte) was dissolved into an EC + EMC solution (solvent) (electrolyte concentration: 1 mol/L)) was dripped onto the separator 30, the graphite sheet was then placed on the separator 30 impregnated with the electrolyte solution to configure a cell.

Subsequently, a resistance of approximately 0.1 Ω was used to short between the Li foil (positive electrode) and graphite sheet (negative electrode) and the graphite sheet was pre-doped with lithium ions to obtain the negative electrode 20. Then, the cell was broken down to extract the pre-doped graphite sheet (negative electrode 20).

Next, an assembly operation was performed to prepare the lithium ion capacitor 1. The entire assembly operation was performed in an argon atmosphere (specifically, inside a glove box filled with argon gas). A bipolar system flat cell was used as an evaluation cell, a circular shaped polyolefin film (diameter: 20 mm) was used as the separator 30, and LiPF6 (electrolyte) was dissolved into an EC + EMC solution (solvent) (electrolyte concentration: 1 mol/L) and used as the electrolyte solution.

The lithium ion capacitor 1 (hereinafter referred to as "the capacitor in Example 1") was configured by inserting the separator 30 impregnated with the electrolyte solution between the above removed negative electrode 20 and the positive electrode 10 prepared as described above.

Further, a lithium capacitor 1 (hereinafter, referred to as "the capacitor in Example 2") was configured in the same method as the capacitor in Example 1 other than using a blended material of de-doped polyaniline and Indigo Carmine (IC, see formula (4) described above) that is one type of indigo compound as the positive electrode active material.

Furthermore, a lithium capacitor 1 (hereinafter, referred to as "the capacitor in Example 3") was configured in the same method as the capacitor in Example 1 other than using a blended material of de-doped polyaniline and anthraquinone (AQ, see formula (6) described above) that is one type of acene compound derivative as the positive electrode active material.

Moreover, a lithium capacitor 1 (hereinafter, referred to as "the capacitor in Example 4") was configured in the same method as the capacitor in Example 1 other than using a blended material of de-doped polyaniline and pentacenetetrone (PCT, see formula (7) described above) that is one type of acene compound derivative as the positive electrode active material.

Also, a lithium capacitor 1 (hereinafter, referred to as "the capacitor in Example 5") was configured in the same method as the capacitor in Example 1 other than using a blended material of de-doped polyaniline and dimethoxy benzoquinone (DMBQ, see formula (9) described above) that is one type of benzoquinone derivative as the positive electrode active material.

Further, for comparison purpose, a lithium capacitor (hereinafter, referred to as "the capacitor in Comparative Example 1") was configured in the same method as the capacitor in Example 1 other than using only de-doped polyaniline as the positive electrode active material.

Furthermore, for comparison purpose, a lithium capacitor (hereinafter, referred to as "the capacitor in Comparative Example 2") was configured in the same method as the capacitor in Example 1 other than using only activated carbon (YP50, manufactured by Kuraray Chemical Co., Ltd) as the positive electrode active material.

Moreover, for comparison reason, an electric double layer capacitor (hereinafter, referred to as "the capacitor in Comparison Example 3") was configured in the same method as the capacitor in Example 1 other than using only activated carbon as the positive electrode active material and an activated carbon electrode (lithium ions were not pre-doped) as the negative electrode.

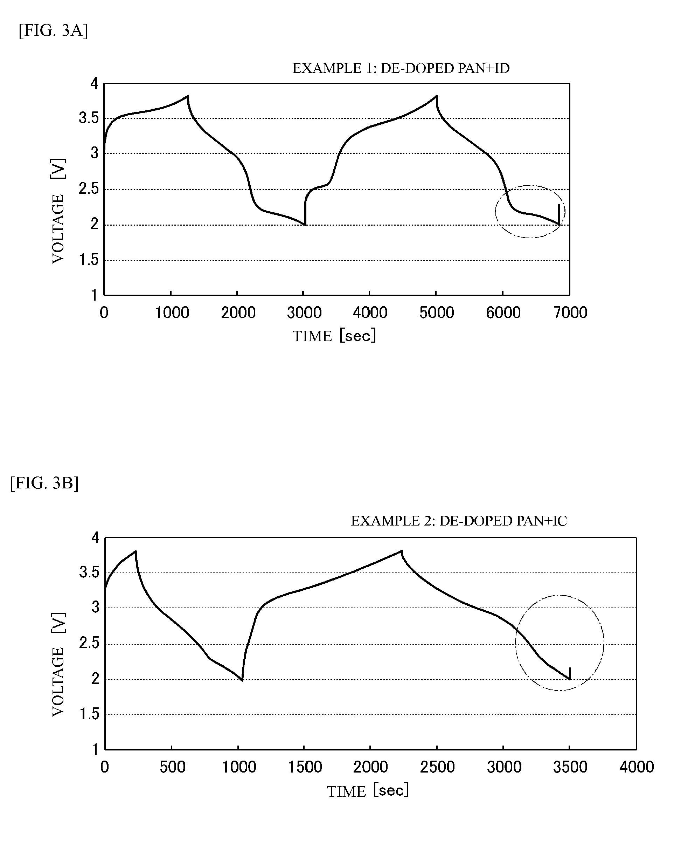

Next, a charge and discharge test was conducted to evaluate characteristics of each capacitor. The charge and discharge test was conducted by the constant current method for Examples 1 through 5 and Comparative Examples 1 and 2 with the following test conditions: charge and discharge current: 1 mA/cm², upper limit voltage: 3.8V, and lower limit voltage: 2.0V. The charge and discharge test was conducted by the constant current method for Comparative Example 3 with the following test conditions: charge and discharge current: 1 mA/cm², upper limit voltage: 2.5V, and lower limit voltage: 0.0V. Energy densities found from results of the charge and discharge tests are shown in Table 1. Further, FIGS. 3 to 6 show the capacitor voltage changes during the charge and discharge tests. Note that, the electrode weight was not precisely uniform in each capacitor.

**[Table 1]**

| Sample Number | Positive Electrode | Negative Electrode | Energy Density [Wh/kg] | Remarks |
|---|---|---|---|---|
| Example 1 | De-doped PAN+ID | Lithium Predoped Graphite | 136.8 | LIC |
| Example 2 | De-doped PAN+IC | Lithium Predoped Graphite | 113.4 | |
| Example 3 | De-doped PAN+AQ | Lithium Predoped Graphite | 119.6 | |
| Example 4 | De-doped PAN+PCT | Lithium Predoped Graphite | 209.8 | |
| Example 5 | De-doped PAN+DMBQ | Lithium Predoped Graphite | 118.2 | |
| Comp. Example 1 | De-doped PAN | Lithium Predoped Graphite | 102.6 | |
| Comp. Example 2 | Activated Carbon (YP50) | Lithium Predoped Graphite | 48.7 | Standard LIC |
| Comp. Example 3 | Activated Carbon (YP50) | ActivatedCarbon (YP50) | 17.3 | EDLC |

As shown in Table 1, it was found that the energy density of the capacitor in Example 1 (that is, the capacitor using a blended material of de-doped polyaniline and indigo as the positive electrode active material) was 7.9 times the energy density of the capacitor in Comparative Example 3 (that is, the electric double layer capacitor), 2.8 times the energy density of the capacitor in Comparative Example 2 (that is, the standard lithium ion capacitor), and 1.3 times the energy density of the capacitor in Comparative Example 1 (that is, the capacitor using only de-doped polyaniline as the positive electrode active material).

Further, as shown in Table 1, it was found that the energy density of the capacitor in Example 2 (that is, the capacitor using a blended material of de-doped polyaniline and Indigo Carmine as the positive electrode active material) was 6.6 times the energy density of the capacitor in Comparative Example 3, 2.3 times the energy density of the capacitor in Comparative Example 2, and 1.1 times the energy density of the capacitor in Comparative Example 1.

This is due to the difference in oxidation-reduction potential between the polyaniline and the indigo compound and the combination of the polyaniline and the indigo compound being suited to the action potential of the lithium ion capacitor.

That is, when polyaniline is used as the positive electrode active material, a large artificial capacitance is generated with the doping and de-doping of the anion.

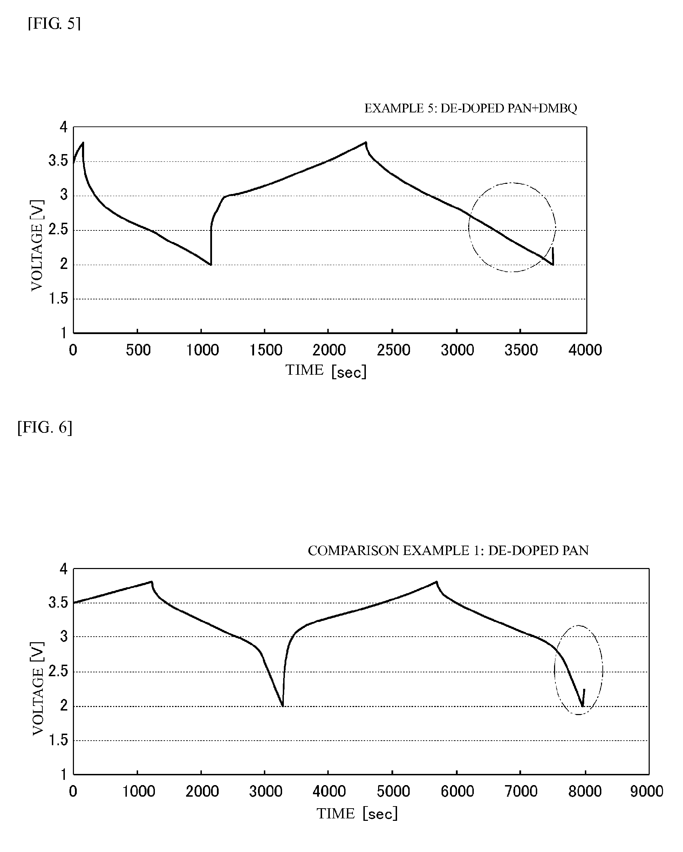

However, when only polyaniline is used as the positive electrode active material as the capacitor in Comparative Example 1, as illustrated in FIG. 6, de-doping is completed at the action potential is 2.5V or below where the action potential of the lithium ion capacitor is between 2 and 4V, and the capacitor voltage rapidly drops (see a portion encircled by an alternate long and short dash line in FIG. 6).

On the other hand, when a blended material of polyaniline and indigo compound is used as the positive electrode active material as the capacitors in Examples 1 and 2, because the oxidation-reduction potential of the indigo compound is around 2.0 to 2.4V as illustrated in FIG. 3A and FIG. 3B, the artificial capacitance is manifest around 2.0 to 2.4 V and the voltage drop becomes gradual (see a portion encircled by an altenate long and short dash line in FIGS. 3A and 3B).

Accordingly, the lithium ion capacitor having a large energy density can be obtained by using a blended material of polyaniline and indigo compound as the positive electrode active material in the lithium ion capacitor.

Further, as shown in Table 1, it was found that the energy density of the capacitor in Example 3 (that is, the capacitor using a blended material of de-doped polyaniline and anthraquinone as the positive electrode active material) was 6.9 times of the energy density of the capacitor in Comparative Example 3, 2.5 times of the energy density of the capacitor in Comparative Example 2, and 1.2 times of the energy density of the capacitor in Comparative Example 1.

Further, as shown in Table 1, it was found that the energy density of the capacitor in Example 4 (that is, the capacitor using a blended material of de-doped polyaniline and pentacenetetrone as the positive electrode active material) was 12.1 times of the energy density of the capacitor in Comparative Example 3, 4.3 times of the energy density of the capacitor in Comparative Example 2, and 2.0 times of the energy density of the capacitor in Comparative Example 1.

This is due to the difference of oxidation-reduction potential between the polyaniline and the acene compound derivative and the combination of the polyaniline and the acene compound derivative being suited to the action potential of the lithium ion capacitor.

That is, when polyaniline is used as the positive electrode active material, a large artificial capacitance is generated with the doping and de-doping of the anion.

However, when only polyaniline is used as the positive electrode active material as the capacitor in Comparative Example 1, as illustrated in FIG. 6, de-doping is completed at 2.5V or below where the action potential of the lithium ion capacitor is between 2 and 4V, and the capacitor voltage rapidly drops (see a portion encircled by an alternate long and short dash line in FIG. 6).

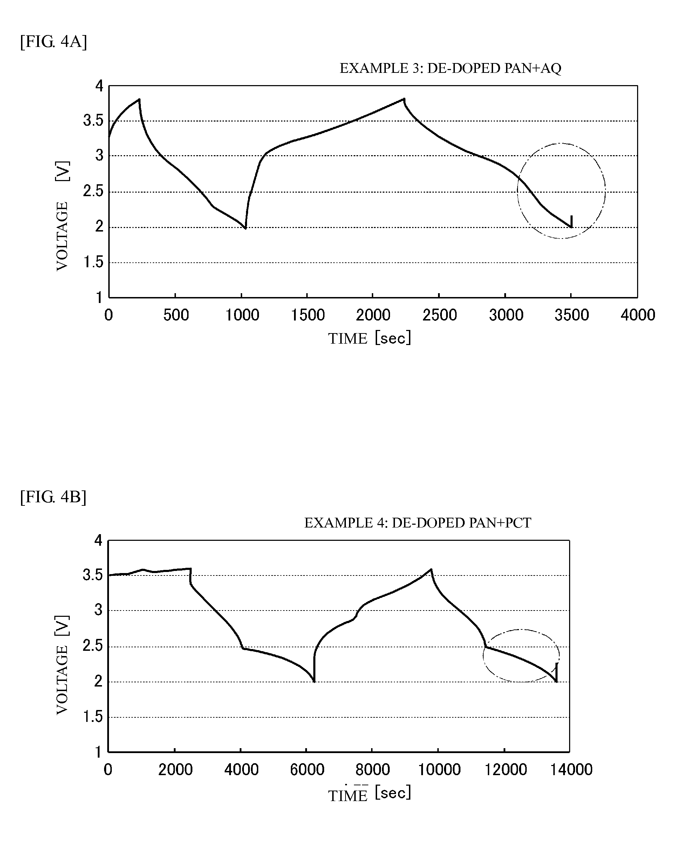

On the other hand, when a blended material of polyaniline and acene compound derivative is used as the positive electrode active material as the capacitors in Examples 3 and 4, because the oxidation-reduction potential of the acene compound derivative is around 2.0 to 2.5V as illustrated in FIG. 4A and FIG. 4B, the artificial capacitance is manifest around 2.0 to 2.5 V and the voltage drop becomes gradual (see a portion encircled by an alternate long and short dash line in FIGS. 4A and 4B). Accordingly, the lithium ion capacitor having a large energy density can be obtained by using a blended material of polyaniline and acene compound derivative as the positive electrode active material in the lithium ion capacitor.

Further, as shown in Table 1, it was found that the energy density of the capacitor in Example 5 (that is, the capacitor using a blended material of de-doped polyaniline and dimethoxy benzoquinone as the positive electrode active material) was 6.8 times the energy density of the capacitor in Comparative Example 3, 2.4 times the energy density of the capacitor in Comparative Example 2, and 1.2 times the energy density of the capacitor in Comparative Example 1.

This was due to the difference in oxidation-reduction potential between the polyaniline and the benzoquinone derivative and the combination of the polyaniline and the benzoquinone derivative being suited to the action potential of the lithium ion capacitor.

That is, when polyaniline is used as the positive electrode active material, a large artificial capacitance is generated with the doping and de-doping of the anion.

However, when only polyaniline is used as the positive electrode active material as the capacitor in Comparative Example 1, as illustrated in FIG. 6, de-doping is completed at 2.5V or below where the action potential of the lithium ion capacitor is between 2 and 4V, and the capacitor voltage rapidly drops (see a portion encircled by an alternate long and short dash line in FIG. 6).

On the other hand, when a blended material of polyaniline and benzoquinone derivative is used as the positive electrode active material as the capacitors in Example 5, because the oxidation-reduction potential of the benzoquinone derivative is around 2.0 to 2.5V as illustrated in FIG. 5, the artificial capacitance is manifest around 2.0 to 2.5 V and the voltage drop becomes gradual (see a portion encircled by an alternate long and short dash line in FIG. 5). Accordingly, the lithium ion capacitor having a large energy density can be obtained by using a blended material of polyaniline and benzoquinone derivative as the positive electrode active material in the lithium ion capacitor.

From the results of Table 1 and FIGS. 3 to 6, it was found that a lithium ion capacitor having a higher energy density than the electric double layer capacitor (capacitor in Comparative Example 3), the lithium ion capacitor (capacitor in Comparative Example 2) where an activated carbon is used as the positive electrode active material, the lithium ion capacitor (capacitor in Comparative Example 1) where a conductive polymer is included as the positive electrode active material although an oxidation reduction material having a lower oxidation reduction potential than the conductive polymer is not included, can be configured by using a blended material of a conductive polymer and an oxidation reduction material having a lower oxidation reduction potential than the conductive polymer is used as the positive electrode active material.

The lithium ion capacitor 1 according to one or more embodiments of the present invention described above may comprise positive electrode 10, negative electrode 20, and an electrolyte, wherein the positive electrode 10 includes a conductive polymer and an oxidation reduction material having a lower oxidation reduction potential than the conductive polymer as the positive electrode active material.

Therefore, a lithium ion capacitor having a high energy density can be provided because the artificial capacitance is manifest near the oxidation reduction potential of the conductive polymer and near the oxidation reduction potential of the oxidation reduction material.

The positive electrode active material may include a plurality of types of oxidation reduction materials as the oxidation reduction material having a lower oxidation reduction potential than a conductive polymer.

Further, according to one or more embodiments of the present invention, the oxidation reduction material may be an acene compound derivative having at least two ketone structures, and the acene compound may be represented by formula (1) described above.

Furthermore, the oxidation reduction material may be at least one selected from naphthoquinone, anthraquinone, pentacenetetrone, or a derivative of these.

By using such oxidation reduction material, a lithium ion capacitor configured with materials with low environmental burden can be provided as a lithium ion capacitor having a high energy density.

Moreover, according to one or more embodiments of the present invention, the oxidation reduction material may be an indigo compound represented by formula (2) described above.

Further, n and m in formula (2) may be 0 or 1, respectively.

Furthermore, the indigo compound may be at least one selected from indigo and Indigo Carmine.

By using such oxidation reduction material, a lithium ion capacitor configured with materials with low environmental burden can be provided as a lithium ion capacitor having a high energy density.

Further, according to one or more embodiments of the present invention, the conductive polymer may be at least one selected from polyaniline, polypyrrole, and polythiophene.

By using such conductive polymers, a capacity increasing effect by being applied with the artificial capacitance with oxidation reduction reaction of the conductive polymer can be fully enjoyed.

It should be understood that the embodiments disclosed here are illustrative examples in all respects and not limited thereto. The scope of the present invention is defined by the scope of patent claims rather than the descriptions above and all changes within the scope of patent claims and the equivalent meaning are included.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Description of the Reference Numerals]

- 1: lithium ion capacitor
- 10: positive electrode
- 20: negative electrode

## Claims

1. A lithium ion capacitor, comprising:
a positive electrode (10);
a negative electrode (20); and
an electrolyte, wherein
the positive electrode (10) comprises a conductive polymer and an oxidation-reduction material having a lower oxidation-reduction potential than the conductive polymer as a positive electrode active material.

2. The lithium ion capacitor according to claim 1, wherein
the oxidation-reduction material is a derivative of an acene compound and has at least two ketone structures, and
the acene compound is represented by the following formula (1): 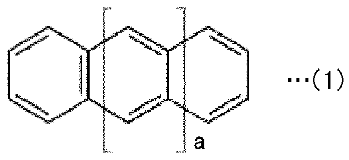 wherein a is in an integer of 0 or higher.

3. The lithium ion capacitor according to claim 1, wherein the oxidation-reduction material is at least one selected from a group comprising naphthoquinone, anthraquinone, pentacenetetrone, and derivatives of naphthoquinone, anthraquinone, and pentacenetetrone.

4. The lithium ion capacitor according to claim 1, wherein the oxidation-reduction material is an indigo compound represented by the following formula (2): 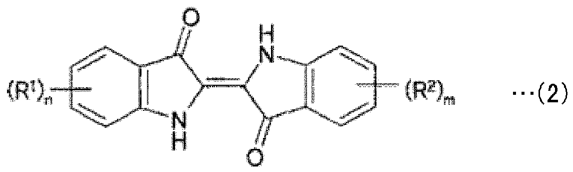
wherein each of R¹ and R² is a group -SO₃M,
M is a hydrogen atom, an alkali metal, or (M¹)_{1/2},
M¹ is an alkali earth metal,
n and m are respectively integers between 0 and 2, and
n number of R¹ and m number of R² may be identical with or different from each other.

5. The lithium ion capacitor according to claim 4, wherein n and m in the formula (2) are each either 0 or 1.

6. The lithium ion capacitor according to claim 4 or 5, wherein the indigo compound is at least one selected from a group comprising indigo and indigo carmine.

7. The lithium ion capacitor according to any of claims 1 to 6, wherein the conductive polymer is at least one selected from a group comprising polyaniline, polypyrrole and polythiophene, the conductive polymer being, in particular, polyaniline.

8. The lithium ion capacitor according to any of claims 1 to 7, wherein the positive electrode (10) further comprises a porous body.

9. The lithium ion capacitor according to claim 8, wherein the porous body is an electrically conductive porous body, the electrically conductive porous body being, in particular, at least one selected from a group comprising activated carbon, grapheme, carbon nanotube, and carbon nanofiber.

10. A method for preparing a positive electrode comprising:
producing a positive electrode active material by blending a conductive polymer and an oxidation-reduction material having a lower oxidation-reduction potential than the conductive polymer.

11. A method for manufacturing a lithium ion capacitor, comprising:
preparing a positive electrode (10) according to claim 10;
preparing a negative electrode (20); and
preparing a medium that comprises at least one electrolyte.

12. The method according to claim 10 or 11, wherein
the oxidation-reduction material is a derivative of an acene compound and has at least two ketone structures, and
the acene compound is represented by the following formula (1): 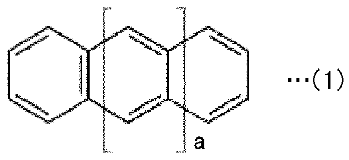 wherein a is in an integer of 0 or higher.

13. The method according to claim 10 or 11, wherein the oxidation-reduction material is an indigo compound represented by the following formula (2): 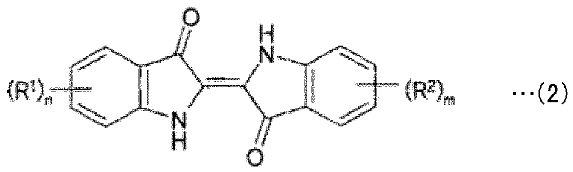
wherein each of R¹ and R² is a group -SO₃M,
M is a hydrogen atom, an alkali metal, or (M¹)_{1/2},
M¹ is an alkali earth metal,
n and m are integers between 0 and 2, and
n number of R¹ and m number of R² may be identical with or different from each other.

14. The method according to any of claims 10 to 13, wherein the preparing of the positive electrode (10) further comprises producing a positive electrode active material slurry by kneading the produced positive electrode active material, a conductive aid, and a binder resin.

15. The method according to claim 14, wherein the preparing of the positive electrode (10) further comprises, prior to the kneading, implementing a doping process or de-doping process on the conductive polymer, and producing the conductive polymer in a doped or de-doped state.

16. The method according to claim 14 or 15, wherein the preparing of the positive electrode further comprises producing the positive electrode (10) by applying the produced positive electrode active material slurry onto a positive electrode current collector (11) and applying pressure to form a positive electrode active material layer (12) on the positive electrode current collector (11).

17. The method according to any of claims 10 to 16, wherein the conductive polymer is at least one selected from a group comprising polyaniline, polypyrrole and polythiophene, the conductive polymer being, in particular, polyaniline.
